# EUROPEAN PATENT APPLICATION

(11) **EP 1 503 272 A1**
(43) Date of publication of application: **02.02.2005**
(21) Application number: 03425505.9
(22) Date of filing: 28.07.2003
(51) Int. Cl.: G06F 3/00

(54) **A portable device**

(71) Applicant: MOTOROLA, INC., Schaumburg, IL 60196 (US)
(72) Inventor: Dikun, Raymond, 10147 Torino (IT); Franceschini, Vincent, 10147 Torino (IT)
(74) Representative: Cross, Rupert Edward Blount

(57) **Abstract**

The invention relates to a portable device (300) and means for providing a tactile signal therefrom and/or a pressure sensor input thereto. The portable device (300) comprises a signal generator (401) generating an electrical activation signal which is fed to a tactile element (301, 303). The tactile element (301, 303) comprises an electroactive polymer as an active tactile element which is responsive to the electrical activation signal. Specifically, the electrical activation signal may be a varying signal causing the tactile element to vibrate. The portable device (300) additionally or alternatively comprises a signal detector (403) coupled to a sensor (301, 303) and operable to detect an electrical sensor signal. The sensor (301, 303) comprises an electroactive polymer as an active sensor element operable to generate the electrical sensor signal in response to an applied mechanical force. The mechanical force may be applied by a user pressing or deforming the sensor (301, 303). The sensor (301, 303) and tactile element (301, 303) may be implemented as the same element.

## Description

### Field of the invention

The invention relates to a portable device and in particular to a portable device having a tactile element.

### Background of the Invention

In the last decade, an increasing amount of portable electronic devices have been introduced to the market and have become increasingly widespread. This trend towards portability and mobility has seen the introduction of many portable communication and computing platforms.

Most significant is probably the introduction and uptake of mobile phones but other examples include portable personal music players and portable computing devices such as laptop computers or Personal Digital Assistants (PDAs).

As these electronic portable devices mature, the user interface (or man - machine interface) has attracted increased attention and much research has been undertaken to improve the user friendliness and ease of operation. For example, alternative input or output means have been introduced including voice activated control, audio feedback etc.

However, the user interface has predominantly been limited to an aural and visual interface. One exception to this is the vibration signal which is used in some mobile phones to indicate that an incoming call is received.

Known methods of generating a vibration signal include the use of a vibration motor. However, such an implementation tends to be relatively bulky and to have relatively high power consumption. A vibration motor furthermore comprises moving parts and is thus mechanically relatively fragile and requires embedding in the portable device. Furthermore, the vibrational movement is limited and the tactile signal that may be generated is consequently limited and inflexible. Specifically, a vibration motor is not particularly suited for generating a variety of different signals but is more suited for generating a single alarm signal for the user. In addition, a vibration motor requires additional software in order to synchronise the vibration signal to an audio signal.

An alternative way of generating a vibration signal comprises using a multi function transducer. In contrast to the vibration motor, the multi function transducer does not require additional software to synchronise to an audio signal as the same signal may be used to generate both an audio and vibration signal (typically frequencies below approximately 20 Hz will be perceived as vibrations whereas higher frequencies will be perceived as sound).

However, a multi function transducer shares many of the disadvantages of a vibration motor including a mechanical sensitivity, a relatively high power consumption and in particular a limited pattern of movements thereby resulting in low flexibility and variety of signals that may be generated. Furthermore, multi function transducers tend to have a significant volume and in particular to have a thickness, which is disadvantageous for use in small portable devices.

Although some mobile phones comprise a microphone and voice recognition software for receiving voice activated commands, known portable devices mainly comprise user input means which are limited to receiving inputs from a keyboard. In addition, some mobile phones and PDAs use touch sensitive screens where a user may provide an input by pressing or tapping a specific part of the screen. However, these input methods tend to be relatively complex to operate and, especially as the size of portable devices reduces, tend to require increasingly accurate control for correct operation. For example, mobile phones are currently reaching sizes which make it very difficult to include a keyboard suitable for operation by human fingers. In addition, more variety and flexibility in input methods are expected to be of significant importance in future years.

In future portable devices, it will be advantageous to improve the user interface and increase the flexibility of the interface to the user. Hence, an improved portable device would be advantageous and in particular a portable device allowing for an improved user interface having increased flexibility, versatility, reduced associated weight, reduced cost, reduced power consumption and/or allowing for additional ways of interfacing would be advantageous.

### Summary of the Invention

Accordingly, the Invention preferably seeks to mitigate, alleviate or eliminate one or more of the above mentioned disadvantages singly or in any combination.

According to a first aspect of the invention there is provided portable device comprising: a first tactile element; means for generating an electrical activation signal; means for providing the electrical activation signal to the first tactile element; and wherein the first tactile element comprises an electroactive polymer as an active tactile element responsive to the electrical activation signal.

The electroactive polymer may for example be electroactive rubber. The invention allows for a tactile interface to a user. The characteristics of electroactive polymers differ from known tactile devices, such as a vibration motor or a multi function transducer, and accordingly a increased variety of user interface options is enabled by the use of electroactive polymer as an active tactile element. For example the electroactive polymer may bend or vibrate in response to the electrical activation signal thereby allowing for a different tactile sensation than conventional means. Electroactive polymer may further allow for a mechanically robust design. Furthermore, an electroactive polymer may allow for a cheap and/or easy to manufacture tactile element. The tactile element may further have low power consumption, low volume and/or low weight.

The electroactive polymer active tactile element may be the only tactile element on the portable device or may be combined with other tactile elements including conventional tactile elements such as a vibration motor and/or a multi function transducer. The presence of an electroactive polymer active tactile element may thus enhance the tactile interface options available in a portable device. The tactile elements may specifically be haptic elements and/or vibratory elements.

According to a feature of the invention, the first tactile element is operable to provide a tactile indication to a user. This allows for an improved user interface and allows for a novel interface option between a portable device and the user.

According to a feature of the invention, the first tactile element is attached to a body of the portable device as an outer element. This may allow for a suitable implementation where the first tactile element may be in direct contact with a user thereby enhancing the tactile sensation provided by the tactile element.

According to a feature of the invention, the first tactile element is removably attached to the body of the portable device. The first tactile element may for example be removable by a user thereby allowing the user to customise the portable device for the current preferences. For example, a trade off between a size of the portable device and the presence of tactile feedback may be made by a user. The tactile element may specifically consist in or be comprised in a sleeve in which the remaining portable device may be inserted.

According to a feature of the invention, the portable device further comprises a second tactile element comprising an electroactive polymer as an active tactile element responsive to the electrical activation signal. Two (or more) tactile elements provide for additional variety and flexibility in the tactile signals or sensations that can be provided to a user. Furthermore, two (or more) tactile elements facilitate provision of tactile and/or haptic effects suitable for different operating positions. For example, it facilitates placing tactile elements such that a tactile sensation may be provided regardless of how the user is holding the portable device. The electrical activation signal may comprise individual activation signals for the two active tactile elements thereby allowing for different tactile sensations of the two tactile elements.

According to a feature of the invention, the second tactile element is attached to the body of the portable device at an opposite side of the first tactile element. This allows for a particularly suitable positioning of tactile elements. For example, it allows for a portable device where the tactile response is suited for a user operating position wherein a hand of the user substantially surrounds the portable device.

According to a feature of the invention, the portable device further comprises a processor for running a user application operably coupled to the means for generating such that the electrical activation signal is generated by the user application.

The tactile element may provide a tactile sensation under the control of the user application thus allowing for a high degree of flexibility of the tactile sensation as well as permitting a user application to provide an additional or enhanced user experience. Specifically, the user application may be an entertainment application including for example a music playback application.

According to a feature of the invention, the user application is a game. The invention may according to this feature allow for an enhanced user experience of a game.

According to a feature of the invention, the portable device is a personal communication device and preferably is a mobile phone. The invention enables an improved user interface for a personal communication device or mobile phone.

According to a feature of the invention, the means for generating is operable to generate the electrical activation signal in response to a detection of an incoming call. The detection of the incoming call may be performed by a different processor than that which controls the electrical activation signal. The invention may allow for an alternative or enhanced means for alerting a user to an incoming call.

According to a second aspect of the invention, there is provided a portable device comprising: a first sensor operable to generate an electrical sensor signal; means, operably coupled to the first sensor, for processing the electrical sensor signal; wherein the first sensor comprises an electroactive polymer as an active sensor element operable to generate the electrical sensor signal in response to an applied mechanical force.

The mechanical force may for example result from pressure on the electroactive polymer, for example by a user pressing on the active sensor element.

The electroactive polymer may for example be electroactive rubber. The invention allows for a pressure input to be received from a user. An increased variety of user interface options is enabled by the use of electroactive polymer as an active sensor element. For example, the electroactive polymer may generate an electrical signal in response to a bending or squeezing by a user thereby allowing for a different tactile input than conventional means. Electroactive polymer may further allow for a mechanically robust design. Furthermore, an electroactive polymer may allow for a cheap and/or easy to manufacture pressure sensor. The sensor may further have low volume and/or low weight.

The electroactive polymer sensor may be the only sensor on the portable device or may be combined with other sensors including conventional input means. The presence of an electroactive polymer sensor may thus provide and/or enhance the tactile interface options available in a portable device.

According to a feature of the invention, the first sensor is a substantially tactile user sensor. This allows for an improved user interface and allows for a novel interface option between a portable device and the user.

According to a feature of the invention, the first sensor is attached to a body of the portable device as an outer element. This may allow for a suitable implementation where the active sensor element may be in direct contact with a user thereby enhancing the tactile sensation and control provided by the first sensor.

According to a feature of the invention, the first sensor is removably attached to the body of the portable device. The first sensor may for example be removable by a user thereby allowing the user to customise the portable device for the current preferences. For example, a trade off between the size of a portable device and the presence of a tactile or pressure input may dynamically be made by a user. The sensor may specifically consist in or be comprised in a sleeve in which the portable device may be inserted.

According to a feature of the invention, the portable device further comprises a second sensor comprising an electroactive polymer as an active sensor element operable to generate a second electrical sensor signal. Two (or more) pressure or tactile sensors provide for additional variety and flexibility in the tactile signals or sensations that can be used to provide an input from a user. Furthermore, two (or more) sensors facilitate provision of sensors suitable for different operating positions. For example, it facilitates placing pressure sensors such that a tactile input may conveniently be provided regardless of how the user is holding the portable device.

According to a feature of the invention, the second sensor is attached to the body of the portable device at an opposite side to the first sensor. This allows for a particularly suitable positioning of sensors. For example, it allows for a portable device where the sensors are suited for a user operating position wherein a hand of the user substantially surrounds the portable device.

According to a feature of the invention, the means for processing is operable to run a user application responsive to the first sensor signal.

The sensor may provide a first sensor signal in response to a tactile input from a user and this may be provided to the user application which is responsive thereto. The user application may thus be controlled by a tactile input detected by an electroactive polymer. This may allow for a high degree of flexibility and variety of the possible input means and may permit an enhanced user experience. Specifically, the user application may be an entertainment application including for example a music playback application.

According to a feature of the invention, the user application is a game. The invention may according to this feature allow for an enhanced user experience and control of a game.

According to a feature of the invention, the portable device is a personal communication device and preferably a mobile phone. The invention enables an improved user interface for a personal communication device or mobile phone.

According to a feature of the invention, the means for processing is operable to instigate a communication in response to the electrical sensor signal. Thus instigation of a communication may be facilitated and/or the user may be provided with additional means of instigating a communication. For example, when a personal communication device is squeezed, one or more pressure sensors may detect this and a call to a preferred telephone number may be instigated in response.

According to a feature of the invention, the portable device according to the second aspect further comprises: a first tactile element; means for generating an electrical activation signal; means for providing the electrical activation signal to the first tactile element; and the first tactile element comprises an electroactive polymer as an active tactile element responsive to the electrical activation signal.

This allows for a portable device having both tactile (pressure) input and tactile output means. These may furthermore have comparable properties and may specifically have similar tactile properties.

According to a feature of the invention, the active tactile element and the active sensor element is the same electroactive polymer element. This allows for reduced size and cost as the same electroactive polymer may be used for providing both input and output means. It furthermore facilitates operation as the same operating position may be conveniently used by a user to both provide a tactile input and to receive a tactile output.

These and other aspects, features and advantages of the invention will be apparent from and elucidated with reference to the embodiment(s) described hereinafter.

### Brief Description of the Drawings

An embodiment of the invention will be described, by way of example only, with reference to the drawings, in which
FIG. 1 illustrates a simplified block diagram of a portable device having a tactile element in accordance with an embodiment of the invention;
FIG. 2 illustrates a simplified block diagram of a portable device having a sensor in accordance with an embodiment of the invention;
FIG. 3 illustrates a top view of a portable device in accordance with an embodiment of the invention; and
FIG. 4 illustrates a simplified block diagram of a portable device having combined sensor and tactile elements in accordance with an embodiment of the invention.

### Detailed Description of a Preferred Embodiment of the Invention

The following description focuses on an embodiment of the invention applicable to a personal communication device and in particular to a mobile phone having additional computational functionality. However, it will be appreciated that the invention is not limited to this application but may be applied to many other portable devices.

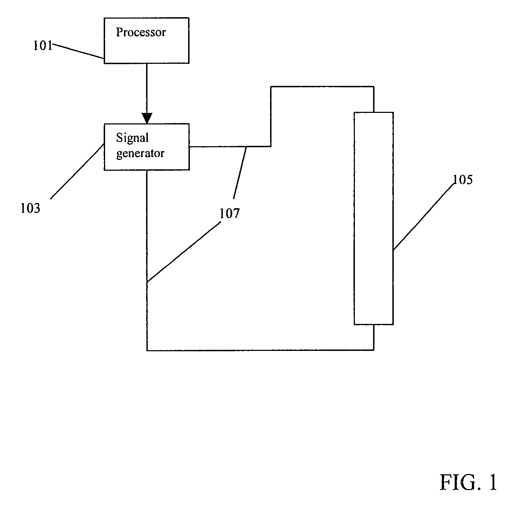

FIG. 1 illustrates a simplified block diagram of a portable device having a tactile element in accordance with an embodiment of the invention. For brevity and clarity, FIG. 1 illustrates only the functional elements required for a description of an embodiment of the invention and it will be clear to the person skilled in the art that the portable device may comprise many other functional modules required or desired for the operation of the portable device.

In the preferred embodiment, the portable device is a personal communication element such as a wireless user equipment, a mobile station, a communication terminal, a personal digital assistant, a laptop computer, an embedded communication processor or any other communication entity operable to communicate over an air interface. In other embodiments, the portable device does not comprise wireless communication functionality but may for example be a personal music player or portable gaming device.

The portable device of FIG. 1 comprises a processor 101 which in the preferred embodiment is a micro processor or a micro controller. The processor 101 controls and manages the operation of the portable device including the control of external functional blocks. Thus, the processor 101 generally comprises the functional modules of the portable device which are implemented by software or firmware as well as the control functional modules required for controlling external hardware modules. In the preferred embodiment of a personal communication device, the processor 101 may thus comprise functionality for implementing the firmware communication modules, implementing the communication protocol stack, control functionality for controlling the communication hardware modules and for controlling the user interface means which specifically may comprise a keyboard and a display.

In the embodiment of FIG. 1, the processor 101 is coupled to a signal generator 103 which is operable to generate an electrical activation signal. Specifically, the processor 101 may send commands to the signal generator 103 which generates the electrical activation signal in response to these commands. The signal generator 103 may specifically be implemented, at least partly, by the micro processor or micro controller implementing the processor 101.

The signal generator 103 is coupled to a first tactile element 105 by electrical wires 107. The electrical wires 107 thus provide the electrical activation signal to the first tactile element 105. In response to an electrical activation signal, the tactile element 105 is operable to change a physical characteristic and specifically to move, change shape, deform, vibrate, bend, flex, change texture or in other ways modify a physical characteristic that may be detected through the sense of touch.

The tactile element 105 comprises an electroactive polymer as an active tactile element responsive to the electrical activation signal. In the preferred embodiment, the tactile element 105 substantially consists in the electroactive polymer element but in some embodiments, the electroactive polymer may only be a part of the tactile element. For example, the electroactive polymer may be embedded in a flexible material in order to protect the electroactive polymer and to provide a more durable exterior. The tactile element is preferably situated on the exterior or in direct contact with the exterior of the portable device.

Electroactive polymer comprises the property that it may alter a physical characteristic in response to an electrical signal. Specifically, the electroactive polymer may be an electroactive rubber and may comprise materials generally referred to as electroactive muscle.

Electroactive polymers have been investigated in the field of robotics as they appear promising for constructing electrically controllable electroactive muscles. Specifically, in response to an electrical activation signal, an element of electroactive polymer will deform and typically bend or flex. Specifically, if an oscillating signal is provided, the electroactive polymer may perform a vibratory bending or flexing which is detectable by a tactile sensation.

In the preferred embodiment, the signal generator 103 is controlled to generate an electrical activation signal that produces a desired tactile sensation to a user in direct or indirect contact with the electroactive polymer. For example, the electrical activation signal may be a sinusoidally varying signal resulting in a vibrating movement of the electroactive polymer.

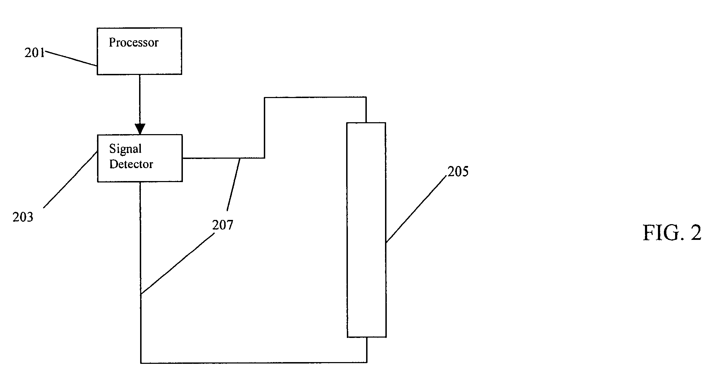

FIG. 2 illustrates a simplified block diagram of a portable device having a sensor in accordance with an embodiment of the invention. For brevity and clarity, FIG. 2 illustrates only the functional elements required for a description of an embodiment of the invention, and it will be clear to the person skilled in the art that the portable device may comprise many other functional modules required or desired for the operation of the portable device.

In the preferred embodiment, the portable device is similar to the portable device of FIG. 1 and is specifically a personal communication element.

The portable device of FIG. 2 comprises a processor 201 which in the preferred embodiment is a micro processor or micro controller. The processor 201 controls and manages the operation of the portable device including the control of external functional blocks. Thus, the processor 201 generally comprises the functional modules of the portable device which are implemented by software or firmware as well as the control functional modules required for controlling external hardware modules. In the preferred embodiment of a personal communication device, the processor 201 may thus comprise functionality for implementing the firmware communication modules, implementing the communication protocol stack, control functionality for controlling the communication hardware modules and for controlling the user interface means which specifically may comprise a keyboard and a display.

The processor 201 is connected to a signal detector 203 which is operable to detect an electrical sensor signal. For example, the electrical sensor signal may be a voltage or current impulse and the signal detector 203 may simply consist in a threshold detector which detects when an electrical current or voltage exceeds a given threshold. The signal detector 203 may thus process the electrical sensor signal to generate a signal indication associated with an indication from a sensor. In some embodiments, the signal detector 203 and the processor 201 together form means for processing the electrical sensor signal.

The signal detector 203 is coupled to a first sensor 205 through electrical wires 207. The electrical wires 207 thus couple an electrical sensor signal generated by a sensor 205 to the signal detector. The sensor 205 is operable to generate the electrical sensor signal in response to a change of a physical characteristic of the sensor and specifically in response to a move, a shape change, a deformation, a vibration, a bending, a flexing or another modification of a physical characteristic of the sensor which may be achieved by a mechanical force. Such, a mechanical force may specifically be provided by a physical action by a user and in the preferred embodiment, the first sensor 205 is a substantially tactile user sensor operable to detect a user pressing or otherwise applying a force to the sensor 205. The sensor 205 may directly sense the applied mechanical force but in the preferred embodiment the sensor detects the force indirectly by detecting a deformation of the sensor 205 resulting from the applied physical force.

The sensor 205 comprises an electroactive polymer as an active sensor element which is operable to generate the electrical actuation signal in response to the applied mechanical force. In the preferred embodiment, the sensor 205 substantially consists in the electroactive polymer element but in some embodiments, the electroactive polymer may only be a part of the sensor. For example, the electroactive polymer may be embedded in a flexible material in order to protect the electroactive polymer and to provide a more durable exterior. The sensor is preferably situated on the exterior or in direct contact with the exterior of the portable device.

Electroactive polymer comprises the property that it generates an electrical signal or impulse in response to an alteration of a physical characteristic such as a deformation of the electroactive polymer. The electroactive polymer may specifically be an electroactive rubber and may comprise materials generally referred to as electroactive muscle.

Thus, in the embodiment of FIG. 2, a user may for example cause a deformation of the electroactive polymer in the sensor 205 thereby causing an electrical sensor signal to be generated. This is detected by the signal detector 203 via the electrical wires 207 and the processor 201 is informed of the detection. The processor 201 may then act in accordance with the detection and may specifically perform a specific operation associated with a detection of a deformation of the sensor 205.

In the preferred embodiment, the same element is operable to implement both the active tactile element as well as the active sensor element. A portable device may thus preferably comprise both the functionality illustrated in FIG. 1 and that illustrated in FIG. 2. Thus, an electroactive polymer is in the preferred embodiment operable to both generate a tactile signal as well as to detect a physical force (or a deformation caused by the force) applied to the electroactive polymer. Thus, the electroactive polymer acts both as a tactile generator and sensor and thus doubles as both output and input means.

In some embodiments, the portable device not only comprises a first electroactive polymer element but also comprises a second electroactive polymer element and possibly also a third or more electroactive polymer elements.

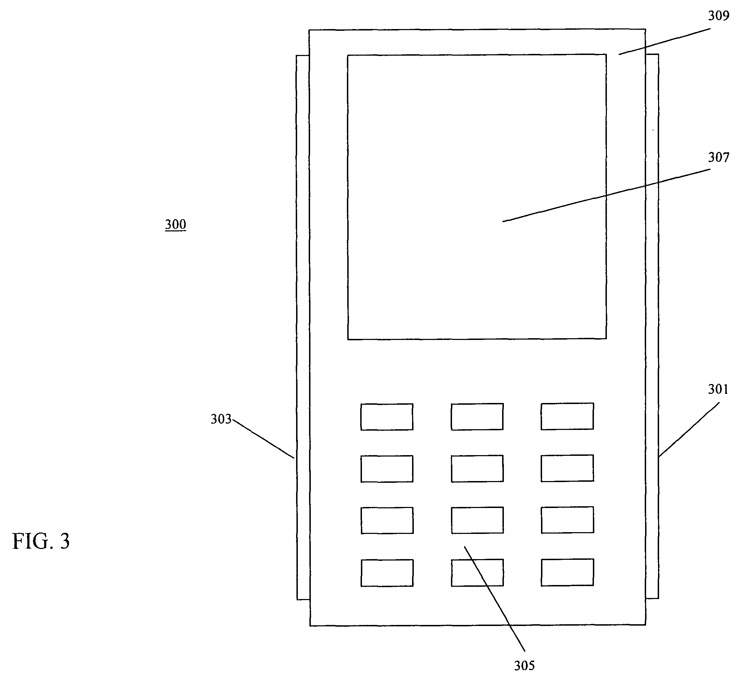

FIG. 3 illustrates a top view of a portable device in accordance with an embodiment of the invention. In the embodiment illustrated in FIG. 3, a mobile phone 300 comprises a first electroactive polymer element 301 and a second electroactive polymer element 303. The term electroactive polymer element is here used to denote an element comprising an electroactive polymer acting as an active sensor element, an active tactile element or both as an active sensor element and an active tactile element. The electroactive polymer element may thus be a combined sensor and tactile element as described with reference to FIG. 1 and FIG. 2. The electroactive polymer element comprises an electroactive polymer but may further comprise other elements including materials suitable for providing a protection of the electroactive polymer or for facilitating fastening on a housing of the mobile phone 300.

The mobile phone 300 comprises a keyboard 305 which is operable to provide user input to the mobile phone 300 as is well known in the art. In addition, the mobile phone 300 comprises a display 307 which is operable to provide a user output interface as is well known in the art. Furthermore, the electroactive polymer elements 301, 303 are operable to provide tactile user interface means. Specifically, a tactile signal may be generated by the electroactive polymer elements being activated to vibrate or flex. Likewise, the user may press or squeeze the electroactive polymer elements 301, 303 thereby generating a user input that can be detected by the mobile phone 300.

As illustrated in FIG. 3, the electroactive polymer elements are preferably attached to a body 309 or housing of the portable device as an outer element. Any suitable method of fastening the electroactive polymer elements 301, 303 to the body 309 may be used including for example a bonding by an adhesive or screwing of the electroactive polymer elements to the housing.

The provision of two electroactive polymer elements 301, 303 are preferably on opposite sides of the body 309. This allows for a very convenient placement which is suitable for both providing a tactile sensation and receiving a tactile input for a standard operation position. For example, when using a mobile phone 300, a user typically rests the thumb (and/or an area of the palm adjacent to the thumb) on one side of the phone while the remaining fingers cradle the opposite side. For this operating position, a tactile sensation is conveniently imported to both the thumb, the palm and the remaining fingers. Furthermore, a tactile input may be provided simply by squeezing the hand together whereby the thumb will exert a pressure on the electroactive polymer element on one side while the remaining fingers exert a pressure on the electroactive polymer element on the opposite side. The pressure (or applied force) may specifically cause the electroactive polymer elements to deform thereby generating an electrical sensor signal that may be detected by the mobile phone.

In some embodiments, the electroactive polymer elements are removably attached to the body of the portable device. Specifically, the fastening of the electroactive polymer elements 301, 303 to the body of a mobile phone 300 may be of a non-permanent nature which allows for the electroactive polymer elements 301, 303 to be removed and re-attached a number of times. For example, a mechanical coupling may be implemented wherein the electroactive polymer may be releasably fastened to the housing.

In some embodiments, one or more electroactive polymer elements may be implemented in a sleeve in which the portable device may be inserted or removed. This will allow for a user to decide whether the electroactive polymer elements are included in order to provide the additional functionality or whether the electroactive polymer elements are removed in order to reduce size and weight of the portable device. This allows for a very flexible approach where a user may customise the portable device for his current preferences.

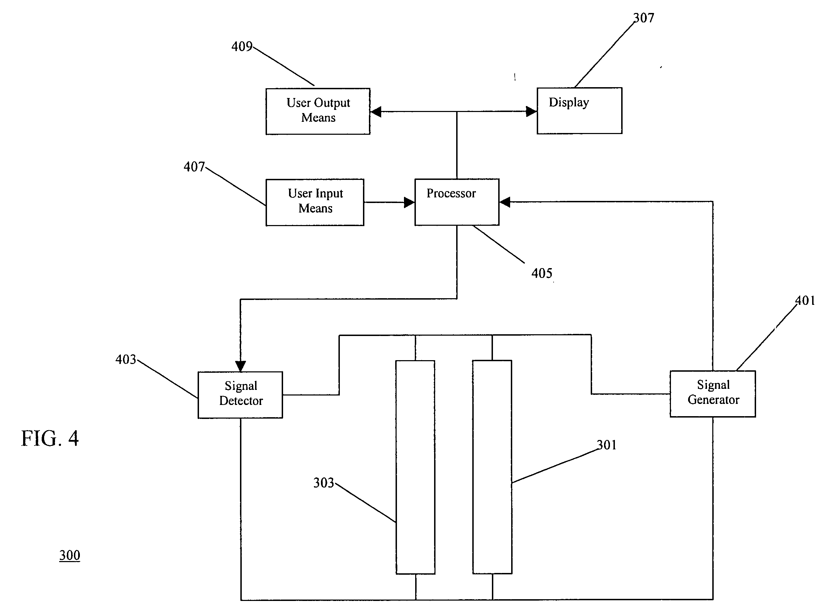

FIG. 4 illustrates a simplified block diagram of a portable device having combined sensor and tactile elements in accordance with an embodiment of the invention. FIG. 4 illustrates functional modules of the mobile phone 300 of FIG. 3.

As illustrated in FIG. 4, the two electroactive polymer elements 301, 303 are in the preferred embodiment coupled in parallel. Thus, in the preferred embodiment, the same electrical activation signal is fed to both of the electroactive polymer elements 301, 303 and a combined electrical sensor signal is obtained from the two electroactive polymer elements 301, 303.

The electroactive polymer elements 301, 303 are connected to a signal generator 401. The signal generator is operable to generate the electrical activation signal for the electroactive polymer elements 301, 303 and may be equivalent to the signal generator 103 described with reference to FIG. 1.

The electroactive polymer elements 301, 303 are further connected to a signal detector 403. The signal detector 403 is operable to detect an electrical sensor signal from one or both of the electroactive polymer elements 301, 303 and may be equivalent to the signal detector 203 described with reference to FIG. 2.

The signal generator 401 and signal detector 403 are both connected to a processor 405 which operates and controls the mobile phone 300. The processor may specifically be equivalent to the processor 101 described with reference to FIG. 1 combined with the processor 203 described with reference to FIG. 2. The processor 405 may thus implement the functionality of both the processor 101 of FIG. 1 and the processor 201 of FIG. 2.

The processor 405 is further coupled to user input means 407 which in the preferred embodiment is the keyboard 305. Furthermore, the processor 405 is coupled to the display 307 as well as other user output means 409, which in the preferred embodiment comprises a loudspeaker and associated amplifier. Thus, the processor 405 is operable to control the portable device and specifically to control and operate the interface to a user.

When a tactile sensation is to be generated, the processor 405 controls the signal generator 401 to generate an electrical activation signal. For example, the processor 405 may detect that an incoming signal is received by the mobile phone 300, and in response, a vibration of the electroactive polymer elements 301, 303 is instigated. Thus the processor 405 controls the signal generator 401 to generate a suitable electrical activation signal which specifically may be a sinusoidal of an appropriate amplitude. This signal is fed to both electroactive polymer elements 301, 303 in parallel thereby causing both electroactive polymer elements 301, 303 to vibrate thus creating an alert signal for a user.

In use as a sensor element, the signal detector 403 detects if an electrical sensor signal is generated by one or both of the electroactive polymer elements 301, 303.

As illustrated in FIG. 4, the electroactive polymer elements 301, 303 have combined input and output connections. Thus the same connections are used both for providing the electrical activation signal to the electroactive polymer elements 301, 303 and for detecting an electrical sensor signal from the electroactive polymer elements 301, 303. In this embodiment, the signal detector 403 is disabled by the processor 405 when an electrical activation signal is provided to the electroactive polymer elements 301, 303. Likewise, the signal generator is operable to provide a high impedance (e.g. substantially open circuit) output when no electrical activation signal is provided to the electroactive polymer elements 301, 303.

Also, in the preferred embodiment, the two electroactive polymer elements 301, 303 are connected in parallel. Thus, when differing electrical sensor signals are generated by the two electroactive polymer elements 301, 303, one electroactive polymer element will act as a load for the other. Provided the impedance of the electroactive polymer element is sufficiently high this will be acceptable. However, in other embodiments, the signal detector 403 is operable to individually detect an electrical sensor signal from each of the electroactive polymer elements 301, 303. In yet other embodiments, the two electroactive polymer elements 301, 303 are electrically separated from each other by a suitable circuit, for example by inserting diodes in series with the connections to each electroactive polymer element 301, 303.

When an electrical sensor signal is detected from the electroactive polymer elements 301, 303, the signal detector 403 informs the processor 405 of this detection and the processor 405 performs an operation in response. For example, the processor 405 may be operable to perform a specific operation that has previously been defined by the user. This operation may specifically be to instigate a communication. Specifically, the processor 405 may initiate an emergency call by calling a previously defined emergency number. Thus, in this embodiment, an emergency call may be set up simply by a user squeezing the mobile phone 300.

In the preferred embodiment, the processor 405 is further operable to run a user application, i.e. an application directed to the user. This user application may for example be a game, a music application or a calendar application.

In this embodiment, the user application may control the signal generator 401 to cause an electrical activation signal to be generated. Thus, the user application may directly generate a tactile signal that can be detected by the user. For example, a calendar program may cause a vibrating signal to be generated at a given time to alert the user to a calendar entry. The tactile signal generated may be different than the signal used to indicate the detection of an incoming call thereby allowing for the user to be informed of the calendar entry without requiring an audio or visual indication.

If the user application is a game, the electroactive polymer elements may be used to provide an enhanced gaming experience. For example, in a racing game, the electroactive polymer elements may be made to vibrate if a collision occurs. As another example, the electroactive polymer elements may be made to vibrate if the car leaves the appointed track thereby making it more difficult for the user to control the car.

Likewise, the electroactive polymer elements may be used to control the user application. In this embodiment, the detection indication of the signal detector is directly or indirectly made available to the user application which may then operate in response. For example, in a game, the movement of one or more elements may be controlled by the user pressing on one or both electroactive polymer elements. As a specific example, a car of a racing game may be controlled to steer towards the right if the right hand side electroactive polymer element is pressed and towards the left if the left hand side electroactive polymer element is pressed (this requires an embodiment wherein the electrical sensor signal is detected individually for the two electroactive polymer elements).

It will be appreciated that although the previous description has focussed on a description of an embodiment having both sensor and tactile signal generator functions, these may be individually implemented and a portable device may only comprise one of these options. Also, although the previous description has focussed on an implementation comprising two electroactive polymer elements coupled in parallel, it will be appreciated that any number of electroactive polymer elements may be implemented and that these may be treated individually or in any suitable grouping.

The invention can be implemented in any suitable form. However, preferably, the invention is implemented partly as computer software running on one or more data processors and/or digital signal processors. The elements and components of an embodiment of the invention may be physically, functionally and logically implemented in any suitable way.

Although the present invention has been described in connection with the preferred embodiment, it is not intended to be limited to the specific form set forth herein. Rather, the scope of the present invention is limited only by the accompanying claims. In the claims, the term comprising does not exclude the presence of other elements or steps. Furthermore, although individually listed, a plurality of means, elements or method steps may be implemented by e.g. a single unit or processor. Additionally, although individual features may be included in different claims, these may possibly be advantageously combined, and the inclusion in different claims does not imply that a combination of features is not feasible and/or advantageous. In addition, singular references do not exclude a plurality. Thus references to "a", "an", "first", "second" etc do not preclude a plurality.

## Claims

1. A portable device comprising:
a first tactile element;
means for generating an electrical activation signal;
means for providing the electrical activation signal to the first tactile element; and
wherein the first tactile element comprises an electroactive polymer as an active tactile element responsive to the electrical activation signal.

2. A portable device as claimed in claim 1 wherein the first tactile element is operable to provide a tactile indication to a user.

3. A portable device as claimed in claim 1 or 2 wherein the first tactile element is attached to a body of the portable device as an outer element.

4. A portable device as claimed in claim 3 wherein the first tactile element is removably attached to the body of the portable device.

5. A portable device as claimed in claim 3 or 4 further comprising a second tactile element comprising an electroactive polymer as an active tactile element responsive to the electrical activation signal.

6. A portable device as claimed in claim 5 as dependent on claim 3 or 4 wherein the second tactile element is attached to the body of the portable device at an opposite side of the first tactile element.

7. A portable device as claimed in any previous claim further comprising a processor for running a user application operably coupled to the means for generating such that the electrical activation signal is generated by the user application.

8. A portable device comprising:
a first sensor operable to generate an electrical sensor signal;
means, operably coupled to the first sensor, for processing the electrical sensor signal;
wherein the first sensor comprises an electroactive polymer as an active sensor element operable to generate the electrical sensor signal in response to an applied mechanical force.

9. A portable device as claimed in claim 8 wherein the first sensor is a substantially tactile user sensor.

10. A portable device as claimed in claim 8 or 9 wherein the first sensor is attached to a body of the portable device as an outer element.

11. A portable device as claimed in claim 8, 9 or 10 wherein the first sensor is removably attached to the body of the portable device.

12. A portable device as claimed in claim 8, 9, 10 or 11 further comprising a second sensor comprising an electroactive polymer as an active sensor element operable to generate a second electrical sensor signal.

13. A portable device as claimed in claim 12 as dependent on claim 10 or 11 wherein the second sensor is attached to the body of the portable device at an opposite side of the first sensor.

14. A portable device as claimed in any previous claim 8 to 13 wherein the means for processing is operable to run a user application responsive to the first sensor signal.

15. A portable device as claimed in any previous claim 8 to 14 further comprising:
a first tactile element;
means for generating an electrical activation signal;
means for providing the electrical activation signal to the first tactile element; and
wherein the first tactile element comprises an electroactive polymer as an active tactile element responsive to the electrical activation signal.

16. A portable device as claimed in claim 15 wherein the active tactile element and the active sensor element is the same electroactive polymer element.
